# EUROPÄISCHE PATENTSCHRIFT

(11) **EP 3 549 808 B1**
(45) Veröffentlichungstag und Bekanntmachung des Hinweises auf die Patenterteilung: **01.06.2022**
(21) Anmeldenummer: 19151767.1
(22) Anmeldetag: 15.01.2019
(51) Int. Cl.: B60K 37/06, B62D 49/00

(54) **LANDWIRTSCHAFTLICHE ARBEITSMASCHINE**
AGRICULTURAL MACHINE
ENGIN AGRICOLE

(30) Priorität: 29.03.2018 DE 102018107577
(43) Veröffentlichungstag der Anmeldung: 09.10.2019
(73) Patentinhaber: CLAAS Tractor S.A.S., 78141 Vélizy-Villacoublay Cedex (FR)
(72) Erfinder: Noyer, Pierre, 81739 München (DE); Heydekorn, Jens, 33428 Harsewinkel (DE); Wieckhorst, Jan Carsten, 33104 Paderborn (DE); Meyer, Lennart, 52062 Aachen (DE)
(74) Vertreter: Budach, Steffen

(56) Entgegenhaltungen:
- EP-A1- 2 734 027
- US-A1- 2014 378 274

## Beschreibung

Die vorliegende Erfindung betrifft eine landwirtschaftliche Arbeitsmaschine, insbesondere einen Traktor, gemäß dem Oberbegriff des Anspruches 1.

Für das Betreiben einer landwirtschaftlichen Arbeitsmaschine ist ein Antriebsstrang mit einem Antriebsmotor sowie einem Getriebe vorgesehen, welcher auch zum Antreiben zumindest eines Arbeitsaggregates zur Durchführung oder Unterstützung landwirtschaftlicher Arbeitsvorgänge oder Prozesse dient, welches Teil der landwirtschaftlichen Arbeitsmaschine oder mit dieser verbindbar und durch eine Nebenabtriebswelle des Getriebes antreibbar ist. Die landwirtschaftliche Arbeitsmaschine umfasst eine Steuereinheit zur Bestimmung von Betriebsparametern zumindest des Antriebsmotors und eine Anzeigevorrichtung zur Visualisierung der durch die Steuereinheit bestimmen Betriebsparameter. Die Visualisierung der Betriebsparameter dient dazu, einer Bedienperson einen Überblick über die aktuelle Betriebssituation zu geben sowie mögliche Verbesserungspotentiale der Leistungsfähigkeit der Arbeitsmaschine erkennen zu können.

Aus der DE 10 2013 110 610 A1 ist eine als Mähdrescher ausgebildete landwirtschaftliche Arbeitsmaschine mit einer Steuereinheit und einer Anzeigevorrichtung zur Anzeige von Parametern der Arbeitsmaschine bekannt, wobei die Steuereinheit eine Gesamteffizienz als einen Einzelwert generiert, welcher der Bedienperson angezeigt wird, wobei für die Bedienerperson aufgrund der Darstellung unmittelbar eine Identifikation eines leistungsbegrenzenden Arbeitsaggregates möglich ist.

Aus der EP 2 734 026 A1 ist ein System zur Anzeige und Steuerung einer Arbeitsmaschine Traktors mit einem Anzeigeorgan zur Anzeige von Performance-Parametern für eine Bedienperson der Arbeitsmaschine bekannt. Das System umfasst einen Prozessor, der ein Simulationssystem bereitstellt, welcher dem Bediener das Ausprobieren unterschiedlicher Einstellungen ermöglicht. Aufgrund der Vielzahl an veränderbaren Parametern setzt das Nutzen des Systems bei der Bedienperson ein hohes Verständnis der technischen Zusammenhänge voraus, um zu sinnvollen Ergebnissen zu gelangen. Folglich ist dieses System nur in geringem Maße für eine einfache und anschauliche Optimierung der tatsächlichen Einstellungen der Arbeitsmaschine geeignet.

Aus der WO 2013/013917 A1 ist eine gattungsgemäße landwirtschaftliche Arbeitsmaschine bekannt.

Nachteilig an dem vorgenannten Stand der Technik ist zudem, dass der Bedienperson ein unmittelbarer Zusammenhang zwischen einer Leistung und einem Wirkungsgrad des Antriebstranges nicht angezeigt wird, um der Bedienerperson das Einstellen eines optimalen Betriebspunktes für einen aktuellen Fahrzustand zu ermöglichen.

Somit liegt der vorliegenden Erfindung die Aufgabe zugrunde, eine landwirtschaftliche Arbeitsmaschine der eingangs genannten Art bereitzustellen, welche einer Bedienperson den Zusammenhang der Betriebsparameter des Antriebsstranges, insbesondere zumindest des Antriebsmotors, auf schnell erfassbare und leicht verständliche Weise zugänglich werden lässt, um die Einstellungen der Arbeitsmaschine zu verbessern.

Diese Ausgabe wird durch die Merkmale des unabhängigen Anspruches 1 gelöst.

Vorteilhafte Weiterbildungen sind Gegenstand der Unteransprüche.

Gemäß dem Anspruch 1 wird eine landwirtschaftliche Arbeitsmaschine, insbesondere Traktor, vorgeschlagen, mit einem Antriebsstrang, zumindest einen Antriebsmotor sowie ein Getriebe umfassend, zum Betreiben der Arbeitsmaschine und zum Antreiben zumindest eines Arbeitsaggregates zur Durchführung oder Unterstützung landwirtschaftlicher Arbeitsvorgänge oder Prozesse, sowie einer Steuereinheit zur Bestimmung von Betriebsparametern zumindest des Antriebsmotors und einer Anzeigevorrichtung zur Visualisierung der bestimmen Betriebsparameter. Um einer Bedienperson den Zusammenhang der Betriebsparameter des Antriebsstranges auf schnell erfassbare und leicht verständliche Weise zugänglich zu machen, um die Einstellungen der Arbeitsmaschine zur Erreichung eines höheren Wirkungsgrades und/oder einer höheren Leistung verbessern zu können, ist vorgesehen, dass die Steuereinheit dazu eingerichtet ist, für einen aktuellen Betriebszustand der Arbeitsmaschine Werte für einen Wirkungsgrad und eine durch den Antriebsstrang übertragene Leistung zu ermitteln, durch Vergleich der ermittelten Werte mit hinterlegten und/oder generierten Maximalwerten des Wirkungsgrades und der Leistung jeweils einen aktuellen Relativwert des Wirkungsgrades und der Leistung zu generieren, und diese Relativwerte in vergleichender Darstellung durch die Anzeigevorrichtung darzustellen. Die vergleichende Darstellung der aktuellen Relativwerte des Wirkungsgrades und der Leistung mit den Maximalwerten des Wirkungsgrades und der Leistung des Antriebsstranges hat den Vorteil, dass bei einem Betrieb in Volllast und besonders im Teillastbereich des Antriebsmotors der Zusammenhang zwischen Leistung und Wirkungsgrad unmittelbar und leicht verständlich dargestellt wird. Einer Bedienperson der Arbeitsmaschine erschließt sich durch die vergleichende Darstellung einfacher der Zielkonflikt zwischen Wirkungsgrad und Leistung des Antriebsstranges und insbesondere des Antriebsmotors während des laufenden Betriebs der Arbeitsmaschine sowie der Einfluss des Betriebs der Arbeitsmaschine im niedrigen Teillastbereich auf den Motorwirkungsgrad. Insbesondere im Fall des Betriebs im niedrigen Teillastbereich, welcher sich ungünstig auf den Motorwirkungsgrad auswirkt, ist diese vereinfachte Visualisierung des Zielkonflikts bedeutsam, um die Arbeitsmaschine effizienter betreiben zu können.

Bevorzugt kann die Steuereinheit dazu eingerichtet sein, für einen aktuellen Betriebszustand der Arbeitsmaschine Werte für einen Motorwirkungsgrad und eine durch den Antriebsmotor übertragene Motorleistung zu ermitteln und durch Vergleich der ermittelten Werte mit den Maximalwerten des Motorwirkungsgrades und der Motorleistung jeweils einen aktuellen Relativwert des Motorwirkungsgrades und der Motorleistung zu generieren.

Dabei können die Maximalwerte des Wirkungsgrades und der Leistung in Abhängigkeit vom jeweiligen Antriebsstrang, insbesondere zumindest von dem Antriebsmotor, vorgebbar und in der Steuereinheit als Startwerte hinterlegbar sein. Denkbar ist auch eine Hinterlegung dieser Maximalwerte in Form eines Kennfeldes.

Bevorzugt können die jeweils ermittelten Maximalwerte des Wirkungsgrades und der Leistung von der Steuereinheit abspeicherbar und als Vergleichswerte für die aktuellen Werte von Wirkungsgrad und Leistung zur Generierung der Relativwerte heranziehbar sein. Dies hat den Vorteil, dass so eine sehr genaue, motorspezifische Anzeige der Relativwerte ermöglicht werden kann.

Gemäß einer Weiterbildung kann die Steuereinheit dazu eingerichtet sein, Wertebereiche, innerhalb derer eine Optimierung der Einstellung der Arbeitsmaschine möglich ist, zu bestimmen und in Verbindung mit dem jeweils aktuellen Relativwert des Wirkungsgrades und der Leistung darzustellen. Auf diese Weise kann der Bedienperson der Arbeitsmaschine eine einfache Orientierungshilfe gegeben werden, in welchem Umfang eine Optimierung des Betriebs der Arbeitsmaschine möglich ist. Die von der Steuereinheit bestimmten Wertebereiche können arbeitsvorgangsbezogen, z.B. Pflügen, Mähen, etc., oder unter Berücksichtigung von Umweltbedingungen, beispielsweise dem Arbeiten auf nassen Böden etc., in der Steuereinheit hinterlegbar sein.

Erfindungsgemäß erfolgt die Anzeige der Relativwerte des Wirkungsgrades und der Leistung abstrahiert durch eine kombinierte grafische Darstellung. Die Bedienperson kann unmittelbar den Wirkungsgrad und die Leistung in Relation zu dem maximal möglichen Wirkungsgrad und der maximalen Leistung sehen und auf diese Weise den aktuellen Betriebspunkt zumindest des Antriebsmotors im Hinblick auf den Wirkungsgrad und die Leistung beurteilen.

Dabei erfolgt die kombinierte grafische Darstellung mittels zumindest zweier im Wesentlichen gleicher geometrischer Grundformen, wobei die zumindest zwei Grundformen von der Anzeigevorrichtung einander überlagernd dargestellt werden. Die Bedienperson kann aus der überlagerten Darstellung auf einen Blick abschätzen, mit welcher Leistung und welchem Wirkungsgrad in Relation zur maximalen Leistung und zum maximalen Wirkungsgrad des Antriebsstranges in dem aktuell eingestellten Betriebspunkt gearbeitet wird.

Insbesondere kann die Darstellung der einen Grundform, welche die Maximalwerte des Wirkungsgrades und der Leistung wiedergibt, statisch erfolgen, während die Darstellung der anderen Grundform, welche die aktuellen Relativwerte des Wirkungsgrades und der Leistung wiedergibt, dynamisch erfolgt. Eine Anpassung der Einstellung zumindest des Antriebsmotors an wenigstens eine sich ändernde Betriebsbedingung, wie beispielsweise ein Wechsel des Arbeitsaggregates, oder das Verlassen des Teillastbereiches hin zum Betrieb unter Volllast, führt zu einer zeitnahen Aktualisierung der Darstellung. Insbesondere kann die überlagernde Darstellung in der Weise erfolgen, dass die dynamisch dargestellte Grundform die statisch dargestellte Grundform überlagert.

Alternativ kann die Darstellung der Relativwerte des Wirkungsgrades und der Leistung abstrahiert unter Verwendung jeweils zumindest zweier im Wesentlichen gleicher geometrischer Grundformen erfolgen, wobei die Grundformen von der Anzeigevorrichtung einander gegenüberstellend darstellbar sind. Hierzu werden die Relativwerte und die Maximalwerte des Wirkungsgrades und der Leistung jeweils separiert voneinander mittels der beiden zugehörigen Grundformen durch die Anzeigevorrichtung angezeigt. Dabei ist eine Darstellung nebeneinander oder ineinander verschachtelt denkbar.

Gemäß einer Weiterbildung kann die Steuereinheit dazu eingerichtet sein, einen Leistungsgrenzwert zu bestimmen und mittels der Anzeigevorrichtung abstrahiert darzustellen, welcher der Visualisierung der Möglichkeit des Betriebs des Antriebsmotors in einer ersten oder einer zweiten Betriebsart dient. Durch die Darstellung des Leistungsgrenzwertes kann der Bedienperson optisch signalisiert werden, ob beispielsweise ein Betrieb eines an der Nebenabtriebswelle angeschlossenen Arbeitsaggregates mit reduzierter Drehzahl der Nebenabtriebswelle bei einer zugleich abgesenkten Drehzahl des Antriebsmotors möglich ist, wodurch ein verbrauchsärmerer Betrieb der Arbeitsmaschine ermöglicht wird.

Des Weiteren kann die Steuereinheit dazu eingerichtet sein, die Anzeigevorrichtung anzusteuern, um die aktuellen Relativwerte zusammen mit zumindest einem vorangehenden, in der Vergangenheit liegenden Relativwert des Wirkungsgrades und/oder der Leistung darzustellen. Hierzu kann zumindest ein Visualisierungselement vorgesehen sein, welches nach einer Änderung der Einstellung zumindest des Antriebsmotors die vorherigen Relativwerte des Wirkungsgrades und/oder der Leistung darstellt.

Gemäß einer Weiterbildung kann die Steuereinheit dazu eingerichtet sein, die Anzeigevorrichtung anzusteuern, die Relativwerte des Wirkungsgrades und der Leistung in vergleichender Darstellung mittels Symbolen oder Piktogrammen durch bildhafte Analogien zu visualisieren. Die Verwendung bildhafter Analogien stellt eine sehr intuitive Möglichkeit dar, die dargestellten Informationen schnell und eindeutig zu erfassen. Im Unterschied zu der Verwendung von geometrischen Grundformen sind keine abstrakten Formen dargestellt, die einen Raum für eine weitergehende Interpretation lassen können.

Die vorliegende Erfindung wird nachstehend anhand eines in den Zeichnungen dargestellten Ausführungsbeispieles näher erläutert.

Es zeigen:
Fig. 1 eine schematische Ansicht einer landwirtschaftlichen Arbeitsmaschine;
Fig. 2a, 2b eine erste und eine zweite Ausführungsform zur Visualisierung von Relativwerten in Zusammenschau mit ermittelten Maximalwerten für Motorwirkungsgrad und Motorleistung in einer ersten Betriebssituation der Arbeitsmaschine;
Fig.3a, 3b die erste und zweite Ausführungsform zur Visualisierung von Relativwerten in einer zweiten Betriebssituation der Arbeitsmaschine;
Fig.4a, 4b die erste und zweite Ausführungsform zur Visualisierung von Relativwerten in einer dritten Betriebssituation der Arbeitsmaschine;
Fig.5a, 5b die erste und zweite Ausführungsform zur Visualisierung von Relativwerten in einer vierten Betriebssituation der Arbeitsmaschine;
Fig. 6 eine dritte Ausführungsform zur Visualisierung der Relativwerte in Zusammenschau mit den ermittelten Maximalwerten für den Motorwirkungsgrad und die Motorleistung;
Fig. 7 eine vierte Ausführungsformen zur Visualisierung der Relativwerte in Zusammenschau mit den ermittelten Maximalwerten für den Motorwirkungsgrad und die Motorleistung;
Fig. 8 eine fünfte Ausführungsform zur Visualisierung der Relativwerte in Zusammenschau mit den ermittelten Maximalwerten für den Motorwirkungsgrad und die Motorleistung;
Fig. 9 eine sechste Ausführungsform zur Visualisierung der Relativwerte in Zusammenschau mit den ermittelten Maximalwerten für den Motorwirkungsgrad und die Motorleistung; und
Fig. 10a, 10b eine siebte und achte Ausführungsform zur Visualisierung der Relativwerte in Zusammenschau mit den ermittelten Maximalwerten für den Motorwirkungsgrad und die Motorleistung.

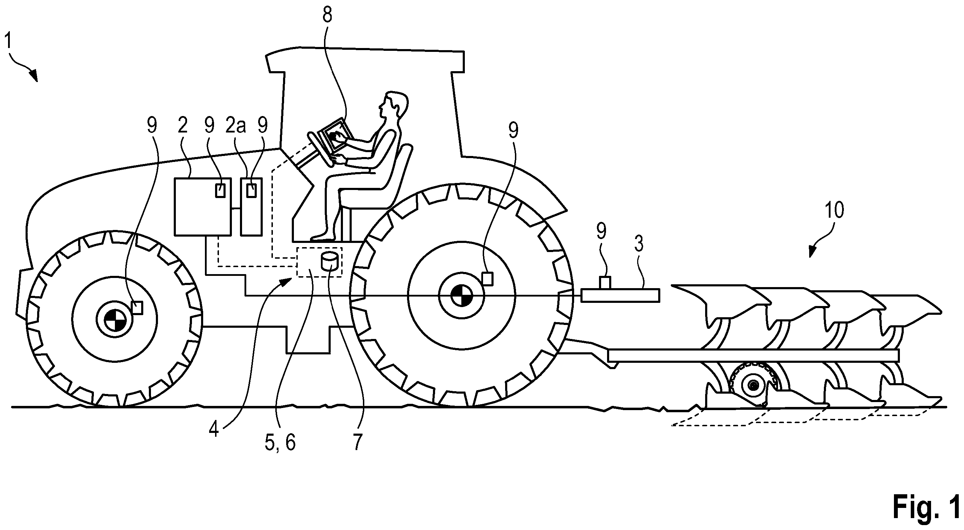

In Fig. 1 ist eine landwirtschaftliche Arbeitsmaschine 1, hier in Form eines Traktors, mit einem Antriebsstrang, der zumindest einen Antriebsmotor 2 und ein Getriebe 2a umfasst, zum Betreiben der Arbeitsmaschine 1 und zum Antreiben zumindest eines Arbeitsaggregates 10, bei dem es sich hier beispielhaft um einen Pflug handelt, zur Durchführung oder Unterstützung landwirtschaftlicher Prozesse, hier eine Bodenbearbeitung, dargestellt. Die landwirtschaftliche Arbeitsmaschine 1 weist eine Steuereinheit 4 auf, die mittels einer Erfassungseinrichtung 5, die verschiedene Sensoreinrichtungen 9 aufweist, unterschiedliche Betriebsparameter der Arbeitsmaschine 1 und/oder des Arbeitsaggregates 10 erfassen kann. Die Sensoreinrichtungen 5 können, um nur einige Beispiele zu nennen, dazu dienen, das abgegebene Antriebsdrehmoment des Antriebsmotors 2 der landwirtschaftlichen Arbeitsmaschine 1, die Drehzahl an der Antriebswelle des Antriebsmotors 2, eine oder mehrere Abtriebsdrehzahlen des Getriebes 2a, die Fahrgeschwindigkeit, die Drehzahl an einer Nebenabtriebswelle 3 des Getriebes 2a etc. zu erfassen. Neben einer automatischen Erfassung von Betriebsparametern mittels einer Sensoreinrichtung 9 ist es auch denkbar, Betriebsparameter durch Berechnung aus sensorisch erfassten Betriebsparametern, zum Beispiel die abgegebene Antriebsleistung aus Antriebsdrehmoment und Drehzahl, zu erhalten, wozu die Steuereinheit 4 eine Recheneinrichtung 6 umfasst, und/oder Betriebsparameter manuell einzugeben und/oder auszuwählen, wozu die Steuereinheit 4 insbesondere eine Anzeigevorrichtung 8, vorzugsweise in Form eines Touchscreens, aufweist.

Die Steuereinheit 4 der landwirtschaftlichen Arbeitsmaschine 1 weist ferner eine Datenbank 7 auf welche in der Recheneinrichtung 6 enthalten, in der die von einer Sensoreinrichtung 9 sowie der Recheneinrichtung 6 bestimmen Betriebsparameter abrufbar hinterlegt sind. Der Vollständigkeit halber sei darauf hingewiesen, dass die Recheneinrichtung 6 und/oder die Datenbank 7 genauso wie die Anzeigevorrichtung 8 nicht zwingend Bestandteil der landwirtschaftlichen Arbeitsmaschine 1 sein muss bzw. müssen, sondern alternativ oder zusätzlich auch außerhalb der Steuereinheit 4 und/oder der landwirtschaftlichen Arbeitsmaschine 1, das heißt extern, vorgesehen sein kann bzw. können.

Die vorschlagsgemäße landwirtschaftliche Arbeitsmaschine 1 erlaubt mittels ihrer Steuereinheit 4 die Erfassung einer Vielzahl von Betriebsparametern und basierend auf den erfassten Betriebsparametern das Bilden unterschiedlicher Leistungskennzahlen des Antriebsstranges, welche die aktuelle Effizienz respektive einen aktuellen Wirkungsgrad in Relation zu einem maximalen Wirkungsgrad sowie eine aktuelle Leistung in Relation zu einer maximalen Leistung des Antriebsstranges wiedergeben. Bevorzugt werden von der Steuereinheit 4 zumindest Leistungskennzahlen des Antriebsmotors 2 gebildet, welche die aktuelle Effizienz respektive einen aktuellen Motorwirkungsgrad Eff in Relation zu einem maximalen Motorwirkungsgrad Eff_max sowie eine aktuelle Motorleistung PWR in Relation zu einer maximalen Motorleistung PWR_max wiedergeben.

So kann beispielsweise die Visualisierung der Leistungskennzahlen auch auf einer separaten Anzeigeeinrichtung innerhalb einer Fahrerkabine der landwirtschaftlichen Arbeitsmaschine 1, auf einem mobilen Eingabe- und Anzeigegerät (smart device), auf einem externen Anzeigegerät eines Rechners des landwirtschaftlichen Betriebs oder eines Lohnunternehmers, auf einem externen Anzeigegerät einer anderen landwirtschaftlichen Arbeitsmaschine, auf einem externen Anzeigegerät eines Arbeitsaggregats 3 (zum Beispiel einer Ballenpresse) und/oder auf einem externen Anzeigegerät einer landwirtschaftlichen Einrichtung erfolgen. Die Recheneinrichtung 6 und/oder die Datenbank 7 kann bzw. können ebenfalls extern angeordnet sein, beispielsweise auf einem mobilen Eingabe- und Anzeigegerät oder auf einem externen Rechner des landwirtschaftlichen Betriebs oder eines Lohnunternehmers.

Um einer Bedienperson der landwirtschaftlichen Arbeitsmaschine 1 den Zusammenhang zwischen der Antriebsleistung und dem Wirkungsgrad des Antriebsmotors 2 in einer leicht verständlichen und schnell erfassbaren Weise anzuzeigen, ist vorgesehen, dass die Steuereinheit 4 dazu eingerichtet ist, für einen aktuellen Betriebszustand der Arbeitsmaschine 1 Werte für den Motorwirkungsgrad Eff und die Motorleistung PWR zu ermitteln und durch Vergleich der ermittelten Werte mit hinterlegten und/oder generierten Maximalwerten des Motorwirkungsgrades Eff und der Motorleistung PWR jeweils einen aktuellen Relativwert des Motorwirkungsgrades Eff_rel und der Motorleistung PWR_rel zu generieren, und diese Relativwerte Eff_rel, PWR_rel in vergleichender Darstellung durch die Anzeigevorrichtung 8 darzustellen.

Dies dient dazu, der Bedienperson das Optimieren des Betriebs der Arbeitsmaschine 1 durch eine geeignete Anpassung von Einstellungen zu erleichtern, indem die Zusammenhänge zwischen der Motorleistung PWR und dem Motorwirkungsgrad EFF möglichst anschaulich durch die Anzeigevorrichtung 8 visualisiert werden.

Dazu können die Maximalwerte des Motorwirkungsgrades Eff_max und der Motorleistung PWR_max in Abhängigkeit vom jeweiligen Antriebsmotor 2 vorgebbar und in der Datenbank 7 der Steuereinheit 4 als Startwerte hinterlegbar sein. Denkbar ist auch eine Hinterlegung der Maximalwerte des Motorwirkungsgrades Eff_max und der Motorleistung PWR_max in Form eines Kennfeldes.

Bevorzugt können die jeweils ermittelten Maximalwerte des Motorwirkungsgrades Eff_max und der Motorleistung PWR_max von der Steuereinheit 4 abspeicherbar und als Vergleichswerte für die aktuellen Werte von Motorwirkungsgrad Eff und Motorleistung PWR zur Generierung der Relativwerte Eff_rel und PWR_rel heranziehbar sein. Dies hat den Vorteil, dass so eine sehr genaue, motorspezifische Anzeige der Relativwerte Eff_rel und PWR_rel ermöglicht werden kann.

Die Steuereinheit 4 ist dazu eingerichtet sein, Wertebereiche, innerhalb derer eine Optimierung der Einstellung der Arbeitsmaschine 1 möglich ist, zu bestimmen und in Verbindung mit dem jeweils aktuellen Relativwert dem Motorwirkungsgrad Eff_rel und der Motorleistung PWR_rel darzustellen. Auf diese Weise wird der Bedienperson der Arbeitsmaschine 1 eine einfache Orientierungshilfe gegeben, in welchem Umfang eine Optimierung des Betriebs der Arbeitsmaschine 1 möglich ist. Die von der Steuereinheit 4 bestimmten Wertebereiche lassen sich arbeitsvorgangsbezogen, z.B. für das Pflügen durch das Arbeitsgerät 10, oder unter Berücksichtigung von Umweltbedingungen, beispielsweise dem Arbeiten auf nassen Böden etc., in der Steuereinheit 4 abrufbar hinterlegen.

Die Anzeige der durch die Recheneinrichtung generierten Relativwerte des Motorwirkungsgrades Eff_rel und der Motorleistung PWR_rel erfolgt abstrahiert durch eine kombinierte grafische Darstellung durch die Anzeigevorrichtung 8. Abstrahiert heißt in diesem Zusammenhang, dass die vergleichende Darstellung nicht in Form von Zahlen erfolgt, sondern die Bedienperson kann unmittelbar die Motorauslastung bzw. den Motorwirkungsgrad Eff und die Motorleistung PWR in Relation zu dem maximal möglichen Motorwirkungsgrad Eff_rel und der maximalen Motorleistung PWR_max sehen und auf diese Weise den aktuellen Betriebspunkt des Antriebsmotors 2 im Hinblick auf den Motorwirkungsgrad Eff und die Motorleistung PWR beurteilen.

Hierfür ist die kombinierte grafische Darstellung unter Verwendung zumindest zweier im Wesentlichen gleicher geometrischer Grundformen 11, 12 bzw. 13, 14, 15, 16 vorgesehen, wobei die zumindest zwei Grundformen 11, 12 bzw. 13, 15, 14, 16 von der Anzeigevorrichtung 8 einander überlagernd darstellbar sind.

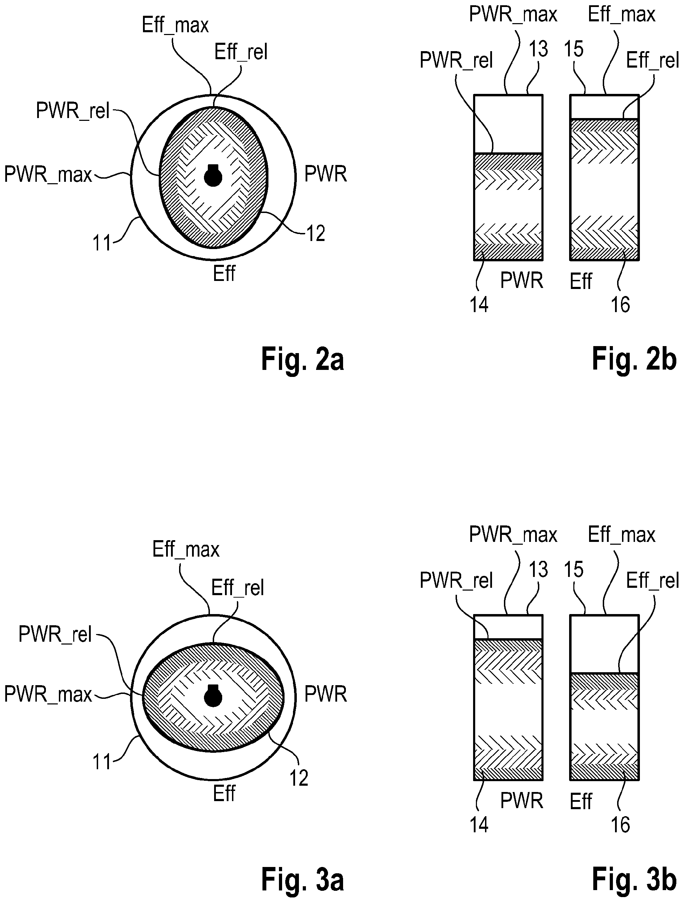

So sind in den Fig.2a bis Fig. 5b beispielhaft verschiedene Betriebssituationen der Arbeitsmaschine 1 dargestellt, welche jeweils in Form eines Kreisdiagramms - linke Abbildung - und eines Balkendiagramms - rechte Abbildung - mittels der Anzeigevorrichtung 8 dargestellt werden.

Die Darstellung in Fig. 2a zeigt eine Betriebssituation, in welcher der Antriebsmotor 2 nahe am maximalen Motorwirkungsgrad Eff_max betrieben wird, während die Motorleistung PWR gering ist. Veranschaulicht wird dies durch eine erste geometrische Grundform 11 in Form eines Kreises 11 und durch eine zweite im Wesentlichen kreisförmige geometrische Grundform 12. Während die erste Grundform 11 durch ihre radiale Ausdehnung in horizontaler und vertikaler Richtung die ermittelten Maximalwerte Eff_max und PWR_max für den Motorwirkungsgrad und die Motorleistung wiedergibt, veranschaulicht die zweite Grundform 12 durch ihre radiale Ausdehnung in horizontaler und vertikaler Richtung die Relativwerte Eff_rel und PWR_rel für den Motorwirkungsgrad und die Motorleistung. Während der radiale Abstand zwischen dem Relativwert Eff_rel und dem Maximalwert Eff_max für den Motorwirkungsgrad in vertikaler Richtung gering ist, weist der horizontale Abstand zwischen dem Relativwert PWR_rel und dem Maximalwert PWR_max für die Motorleistung auf die geringe zur Verfügung stehende Motorleistung PWR in dieser Betriebssituation hin. Die Bedienperson kann sich auf einfache Weise anhand der von der ersten Grundform 11 abweichenden Form der zweiten Grundform 12 unmittelbar ein Bild davon machen, wie sich die aktuelle Einstellung der Arbeitsmaschine 1 auswirkt. Es sind auch beliebige, von der Kreisform abweichende geometrische Grundformen denkbar, um die ermittelten Maximalwerte Eff_max und PWR_max für den Motorwirkungsgrad und die Motorleistung und in Relation hierzu die Relativwerte Eff_rel und PWR_rel für den Motorwirkungsgrad und die Motorleistung in der vorstehend beschriebenen Weise vereinfacht darzustellen.

Die alternative Darstellung in Fig. 2b zeigen zwei Balkendiagramme nebeneinander, welche jeweils durch zwei geometrische Grundformen 13, 14 und 15, 16 visualisiert werden. In analoger Weise zu dem Kreisdiagramm gibt die jeweilige erste Grundform 13, 15 den Maximalwert PWR_max bzw. Eff_max wieder, während die jeweilige zweite Grundform 14, 16 den Relativwert PWR_rel bzw. Eff_rel repräsentiert. Auch gemäß dieser alternativen Darstellung kann die Bedienperson anhand des jeweiligen Abstands zwischen der ersten Grundform 13, 15 und der von dieser überlagert dargestellten zweiten Grundform 14, 16 unmittelbar die aktuelle Motorleistung PWR und den Motorwirkungsgrad Eff in Relation zu den möglichen Maximalwerten PWR_max bzw. Eff_max wahrnehmen. Somit ist es der Bedienperson ohne weiteres möglich, die aktuelle Einstellung des Antriebsmotors 2 im Zusammenhang mit dem Motorwirkungsgrad Eff und der Motorleistung PWR zu beurteilen.

In Fig. 3a ist eine zweite Betriebssituation durch ein Kreisdiagramm und in Fig. 3b durch ein korrespondierendes Balkendiagramm veranschaulicht, in welcher die Einstellung des Antriebsmotors 2 der Arbeitsmaschine einen Betrieb mit annähernd maximaler Motorleistung PWR_max aber reduziertem Motorwirkungsgrad Eff ermöglicht. Während die Ausdehnung in vertikaler Richtung der zweiten Grundform 12 für den Relativwert PWR_rel der Motorleistung annähernd dem Durchmesser der ersten Grundform 11 entspricht, ist der Abstand zwischen der zweiten Grundform 12 für den Relativwert PWR_rel des Motorwirkungsgrades und der ersten Grundform 11 für den Maximalwert Eff_max des Motorwirkungsgrades relativ groß.

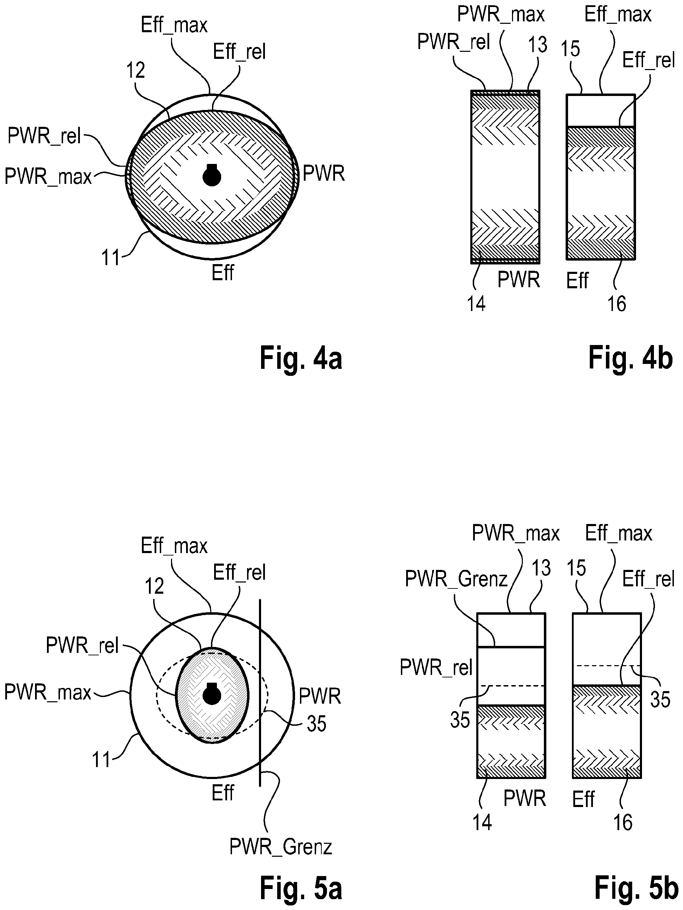

In Fig. 4a und 4b ist jeweils eine dritte Betriebssituation gemäß der ersten und zweiten Ausführungsform veranschaulicht, in welcher die Einstellung des Antriebsmotors 2 einen Betrieb mit einem über der maximalen Motorleistung PWR_max liegenden Relativwert PWR_max der Motorleistung ermöglicht, während die Motoreffizienz Eff gering ist, was durch den großen Abstand zwischen dem Maximalwert Eff_max und Eff_rel verdeutlicht wird. Dies kann beispielsweise bei einem Betrieb der Arbeitsmaschine 1 mit höheren Geschwindigkeiten oder bei einer zusätzlichen Leistungsabnahme an der Nebenabtriebswelle 3 der Fall sein.

In Fig. 5a und 5b ist jeweils eine vierte Betriebssituation gemäß der ersten und zweiten Ausführungsform veranschaulicht, welche einen Betrieb des Antriebsmotors 2 im Tellastbereich darstellt. Diese Betriebssituation zeichnet sich durch eine geringe Motorleistung PWR sowie einen geringen Motorwirkungsrad Eff aus, wie aus den mit der vierten Betriebssituation korrespondierenden Kreis- bzw. Balkendiagrammen zu entnehmen ist. Zusätzlich wird die Darstellung der Motorleistung PWR ergänzt durch einen Leistungsgrenzwert PWR_Grenz, welcher dazu dient, der Bedienperson optisch zu signalisieren, ob ein Betrieb eines an der Nebenabtriebswelle 3 angeschlossenen Arbeitsaggregates 10 mit reduzierter Drehzahl der Nebenabtriebswelle 3 bei einer abgesenkten Drehzahl des Antriebsmotors 2 möglich ist, wodurch ein verbrauchsärmerer Betrieb der Arbeitsmaschine 1 ermöglicht wird.

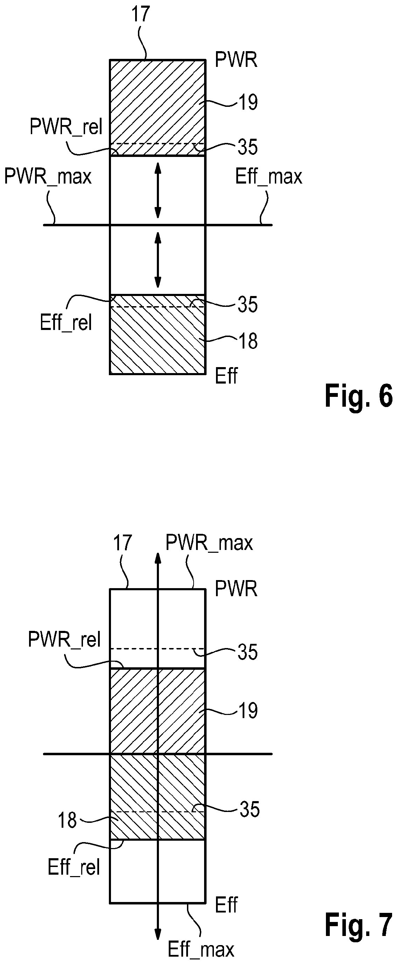

In den Fig. 6 und 7 sind eine dritte und eine vierte Ausführungsform zur Visualisierung der Relativwerte PWR_rel und Eff_rel in Zusammenschau mit den ermittelten Maximalwerten Eff_max und PWR_max für den Motorwirkungsgrad und die Motorleistung gezeigt. Die Visualisierung erfolgt in einer einzelnen kombinierten grafischen Darstellung, indem eine erste Grundform 17 mit zwei die erste Grundform überlagernd dargestellten zweiten Grundformen 18, 19 von der Anzeigevorrichtung 8 visualisiert werden. Die zweiten Grundformen 18, 19 weisen gemäß der in Fig. 6 dargestellten dritten Ausführungsform einen gemeinsamen Zielpunkt auf, der von den Maximalwerten Eff_max und PWR_max gebildet wird, während die äußeren Enden der ersten Grundform 17 den jeweiligen Ursprung bilden. Gemäß der Darstellung der vierten Ausführungsform in Fig. 7 weisen die zweiten Grundformen 18, 19 einen gemeinsamen Ursprung auf, während die äußeren Enden der ersten Grundform 17 den jeweiligen Maximalwert Eff_max bzw. PWR_max darstellen. Entsprechend der jeweiligen Ausführungsform verändert sich die jeweilige zweite Grundform 18, 19 innerhalb der ersten Grundform 17 durch Ausdehnung oder Zusammenziehen in Richtung des entsprechenden Maximalwertes Eff_max bzw. PWR_max bzw. des jeweiligen Ursprungs.

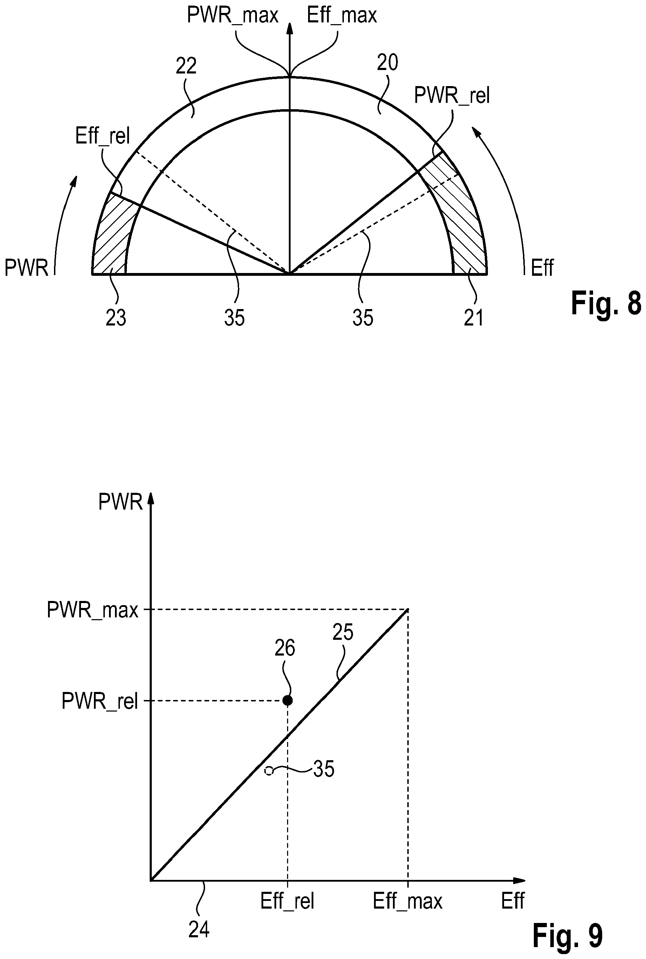

In Fig. 8 ist eine fünfte Ausführungsform zur Visualisierung der Relativwerte PWR_rel und Eff_rel in Zusammenschau mit den Maximalwerten Eff_max und PWR_max für den Motorwirkungsgrad und die Motorleistung gezeigt. Die Darstellung erfolgt in Anlehnung an ein analoges Zeigerinstrument. Zur Visualisierung sind wiederum jeweils zwei geometrische Grundformen 20, 21 und 22, 23 vorgesehen, die im Wesentlichen einem Kreisringsegment entsprechen und einander überlagernd dargestellt werden. Die jeweilige erste Grundform 20, 22 gibt die ermittelten Maximalwerte Eff_max und PWR_max für den Motorwirkungsgrad und die Motorleistung wieder. Die jeweilige zweite Grundform 21, 23 veranschaulicht durch ihre anteilige Ausdehnung in Umfangsrichtung der jeweiligen ersten Grundform die Relativwerte Eff_rel und PWR_rel für den Motorwirkungsgrad und die Motorleistung.

Fig. 9 zeigt eine sehr vereinfachte sechste Ausführungsform zur grafischen Visualisierung der Relativwerte PWR_rel und Eff_rel in Zusammenschau mit den Maximalwerten Eff_max und PWR_max für den Motorwirkungsgrad und die Motorleistung. Dazu wird ein Koordinatensystem 24 schematisch dargestellt, in der die ermittelten Maximalwerte Eff_max und PWR_max als eine lineare Funktion 25 dargestellt sind. Ein sich aus der aktuellen Einstellung der Arbeitsmaschine 1 respektive des Antriebsmotors 2 ergebendes Wertepaar für die Relativwerte Eff_rel und PWR_rel wird in Form eines Punktes 26 in dem Koordinatensystem 24 dargestellt. Aus der Lage des Punktes 26 in Bezug auf den Verlauf der Funktion 25 kann die Bedienperson erkennen, die aktuelle Einstellung des Antriebsmotors 2 im Zusammenhang mit dem Motorwirkungsgrad Eff und der Motorleistung PWR beurteilen.

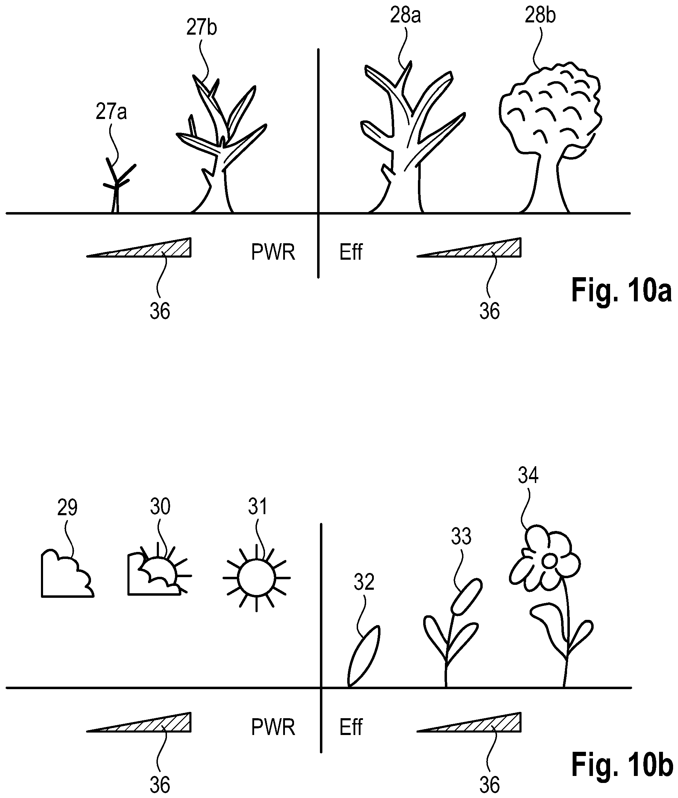

Die Fig. 10a und 10b zeigen eine siebte und achte Ausführungsform zur Visualisierung der Relativwerte PWR_rel und Eff_rel in Zusammenschau mit den Maximalwerten Eff_max und PWR_max für den Motorwirkungsgrad und die Motorleistung. Hierbei werden anstelle von geometrischen Grundformen bildhafte Symbole bzw. Piktogramme 27a, 27b, 28a, 28b, bzw. 29 bis 34 verwendet, um die Relativwerte PWR_rel und Eff_rel in vergleichender Darstellung durch die Anzeigevorrichtung 8 darzustellen. Durch die Verwendung bildhafter Analogien wird eine sehr intuitive Möglichkeit geschaffen, die dargestellten Informationen zu erfassen. Im Unterschied zu der Verwendung von geometrischen Grundformen sind keine abstrakten Formen dargestellt, die einen Raum für eine weitergehende Interpretation lassen. Symbol 27a zeigt einen kleinen Baum, was einen kleinen Relativwert PWR_rel symbolisiert, während Symbol 27b einen groß gewachsenen Baum zeigt, der für einen großen Relativwert PWR_rel steht. In entsprechender Weise veranschaulicht das als Baum ohne Blätter dargestellte Symbol 28a einen kleinen Relativwert Eff_rel, während das Symbol 28b, ein Baum mit Blättern, einen großen Relativwert Eff_rel darstellt.

Die achte Ausführungsform gemäß Fig. 10b zeigt eine feinere Abstufung zwischen den jeweiligen Relativwerten PWR_rel und Eff_rel durch die Verwendung einer höheren Anzahl von bildhaften Symbolen 29, 30, 31 für die Relativwerte PWR_rel und 32, 33, 34 Relativwerten Eff_rel. Zusätzlich ist unterhalb der Symbole gemäß der siebten und achten Ausführungsform ein grafisches Bildelement 36 vorgesehen, welches den ansteigenden Verlauf der Relativwerte PWR_rel und Eff_rel zusätzlich verdeutlicht.

Bei den vorstehend beschriebenen Ausführungsformen kann zumindest ein zusätzliches Visualisierungselement 35 vorgesehen sein, welches nach einer Änderung der Einstellung des Antriebsmotors 2 die vorherigen Relativwerte PWR_rel und Eff_rel darstellt. Dadurch wird der Bedienperson die Auswirkung einer von ihr vorgenommenen Einstellungsänderung nachvollziehbar verdeutlicht.

**Bezugszeichenliste**

| | | | |
|---|---|---|---|
| 1 | Arbeitsmaschine | 29 | Symbol |
| 2 | Antriebsmotor | 30 | Symbol |
| 3 | Nebenabtriebswelle | 31 | Symbol |
| 4 | Steuereinheit | 32 | Symbol |
| 5 | Erfassungseinrichtung | 33 | Symbol |
| 6 | Recheneinrichtung | 34 | Symbol |
| 7 | Datenbank | 35 | Visualisierungselement |
| 8 | Anzeigevorrichtung | 36 | Bildelement |
| 9 | Sensoreinrichtung | PWR | Motorleistung |
| 10 | Arbeitsgerät | PWR_max | Maximalwert Motorleistung |
| 11 | Geometrische Grundform | PWR_rel | Relativwert Motorleistung |
| 12 | Geometrische Grundform | PWR_Grenz | Leistungsgrenzwert |
| 13 | Geometrische Grundform | Eff | Motorwirkungsgrad |
| 14 | Geometrische Grundform | Eff_max | Maximalwert Motorwirkungsgrad |
| 15 | Geometrische Grundform | Eff_rel | Relativwert Motorwirkungsgrad |
| 16 | Geometrische Grundform | | |
| 17 | Geometrische Grundform | | |
| 18 | Geometrische Grundform | | |
| 19 | Geometrische Grundform | | |
| 20 | Geometrische Grundform | | |
| 21 | Geometrische Grundform | | |
| 22 | Geometrische Grundform | | |
| 23 | Geometrische Grundform | | |
| 24 | Koordinatensystem | | |
| 25 | Funktion | | |
| 26 | Wertepaar | | |
| 27a | Symbol | | |
| 27b | Symbol | | |
| 28a | Symbol | | |
| 28b | Symbol | | |

## Patentansprüche

1. Landwirtschaftliche Arbeitsmaschine (1), insbesondere Traktor, mit einem Antriebsstrang, zumindest einen Antriebsmotor (2) sowie ein Getriebe (2a) umfassend, zum Betreiben der Arbeitsmaschine (1) und zum Antreiben zumindest eines Arbeitsaggregates (10) zur Durchführung oder Unterstützung landwirtschaftlicher Arbeitsvorgänge oder Prozesse, sowie einer Steuereinheit (4) zur Bestimmung von Betriebsparametern zumindest des Antriebsmotors (2) und einer Anzeigevorrichtung (8) zur Visualisierung der bestimmen Betriebsparameter, wobei die Steuereinheit (4) dazu eingerichtet ist, für einen aktuellen Betriebszustand der Arbeitsmaschine (1) Werte für einen Wirkungsgrad (Eff) und eine durch den Antriebsstrang übertragene Leistung (PWR) zu ermitteln, durch Vergleich der ermittelten Werte mit hinterlegten und/oder generierten Maximalwerten des Wirkungsgrades (Eff_max) und der Leistung (PWR_max) jeweils einen aktuellen Relativwert des Wirkungsgrades (Eff_rel) und der Leistung (PWR_rel) zu generieren, und diese Relativwerte (Eff_rel, PWR_rel) in vergleichender Darstellung durch die Anzeigevorrichtung (8) darzustellen, **dadurch gekennzeichnet, dass** die Anzeige der Relativwerte des Wirkungsgrades (Eff_rel) und der Leistung (PWR_rel) abstrahiert durch eine kombinierte grafische Darstellung erfolgt, und dass die kombinierte grafische Darstellung unter Verwendung zumindest zweier im Wesentlichen gleicher geometrischer Grundformen (11, 12) erfolgt, wobei die zumindest zwei Grundformen (11, 12) von der Anzeigevorrichtung (8) einander überlagernd dargestellt werden.

2. Landwirtschaftliche Arbeitsmaschine (1) nach Anspruch 1, **dadurch gekennzeichnet, dass** die Steuereinheit (4) dazu eingerichtet sein, für einen aktuellen Betriebszustand der Arbeitsmaschine (1) Werte für einen Motorwirkungsgrad (Eff) und eine durch den Antriebsmotor (2) übertragene Motorleistung (PWR) zu ermitteln und durch Vergleich der ermittelten Werte mit den Maximalwerten des Motorwirkungsgrades (Eff_max) und der Motorleistung (PWR_max) jeweils einen aktuellen Relativwert des Motorwirkungsgrades (Eff_rel) und der Motorleistung (PWR_rel) zu generieren.

3. Landwirtschaftliche Arbeitsmaschine (1) nach Anspruch 1 oder 2, **dadurch gekennzeichnet, dass** die Maximalwerte des Wirkungsgrades (Eff_max) und der Leistung (PWR_max) in Abhängigkeit vom jeweiligen Antriebsmotor (2) und/oder Getriebe (2a) vorgebbar und in der Steuereinheit (4) als Startwerte hinterlegbar sind.

4. Landwirtschaftliche Arbeitsmaschine (1) nach einem der Ansprüche 1 bis 3, **dadurch gekennzeichnet, dass** die jeweils ermittelten Maximalwerte des Wirkungsgrades (Eff_max) und der Leistung (PWR_max) von der Steuereinheit (4) abspeicherbar und als Vergleichswerte für die aktuellen Werte von Wirkungsgrad (Eff) und Leistung (PWR) zur Generierung der Relativwerte (Eff_rel, PWR_rel heranziehbar sind.

5. Landwirtschaftliche Arbeitsmaschine (1) nach einem der vorangehenden Ansprüche, **dadurch gekennzeichnet, dass** die Steuereinheit (4) dazu eingerichtet ist, Wertebereiche, innerhalb derer eine Optimierung der Einstellung der Arbeitsmaschine (1) möglich ist, zu bestimmen und in Verbindung mit dem jeweils aktuellen Relativwert des Wirkungsgrades (Eff_rel) und der Leistung (PWR_rel) darzustellen.

6. Landwirtschaftliche Arbeitsmaschine (1) nach einem der Ansprüche 1 bis 5, **dadurch gekennzeichnet, dass** die Darstellung der einen Grundform (11), welche die Maximalwerte des Wirkungsgrades (Eff_max) und der Motorleistung (PWR_max) wiedergibt, statisch erfolgt, während die Darstellung der anderen Grundform (12), welche die aktuellen Relativwerte des Wirkungsgrades (Eff_rel) und der Leistung (PWR_rel) wiedergibt, dynamisch erfolgt.

7. Landwirtschaftliche Arbeitsmaschine (1) nach einem der Ansprüche 1 bis 6, **dadurch gekennzeichnet, dass** die Darstellung der Relativwerte des Wirkungsgrades (Eff_rel) und der Leistung (PWR_rel) abstrahiert unter Verwendung jeweils zumindest zweier im Wesentlichen gleicher geometrischer Grundformen (13, 14 und 15, 16) erfolgt, wobei die Grundformen (13, 14 und 15, 16) von der Anzeigevorrichtung (8) einander gegenüberstellend darstellbar sind.

8. Landwirtschaftliche Arbeitsmaschine (1) nach einem der vorangehenden Ansprüche, **dadurch gekennzeichnet, dass** die Steuereinheit (4) dazu eingerichtet ist, einen Leistungsgrenzwert (PWR_Grenz) zu bestimmen und mittels der Anzeigevorrichtung (8) abstrahiert darzustellen, welcher der Visualisierung der Möglichkeit des Betriebs des Antriebsmotors (2) in einer ersten oder einer zweiten Betriebsart dient.

9. Landwirtschaftliche Arbeitsmaschine (1) nach einem der vorangehenden Ansprüche, **dadurch gekennzeichnet, dass** die Steuereinheit (4) dazu eingerichtet ist, die Anzeigevorrichtung (8) anzusteuern, um die aktuellen Relativwerte (Eff_rel, PWR_rel) zusammen mit zumindest einem vorangehenden, in der Vergangenheit liegenden Relativwert des Wirkungsgrades und/oder der Leistung darzustellen.

10. Landwirtschaftliche Arbeitsmaschine (1) nach einem der vorangehenden Ansprüche, **dadurch gekennzeichnet, dass** die Steuereinheit (1) dazu eingerichtet ist, die Anzeigevorrichtung (8) anzusteuern, die Relativwerte (EFF_rel, PWR_rel) in vergleichender Darstellung mittels Symbolen (27a, 27a, 28a, 28b; 29 -34) oder Piktogrammen durch bildhafte Analogien zu visualisieren.

## Claims

1. An agricultural working machine (1), in particular a tractor, with a drive train comprising at least one propulsion engine (2) as well as a transmission (2a), for operating the working machine (1) and for propelling at least one working assembly (10) for carrying out or supporting agricultural working procedures or processes, as well as a control unit (4) for determining operating parameters of at least the propulsion engine (2) and a display device (8) for visualisation of the determined operating parameters, wherein the control unit (4) is configured, for a current operational status of the working machine (1), so as to determine values for an efficiency (Eff) and a power (PWR) transmitted by the drive train, to generate a respective current relative value for the efficiency (Eff_rel) and the power (PWR_rel) by a comparison of the determined values with stored and/or generated maximum values for the efficiency (Eff_max) and for the power (PWR_max), and to present these relative values (Eff_rel, PWR_rel) in a comparative representation by means of the display device (8), **characterized in that** the display of the relative values for the efficiency (Eff_rel) and for the power (PWR_rel) is carried out abstracted by means of a combined graphical representation, and **in that** the combined graphical representation is implemented using at least two substantially identical basic geometric shapes (11, 12), wherein the at least two basic shapes (11, 12) are shown on the display device (8) in a manner which is superimposed on each other.

2. The agricultural working machine (1) according to claim 1, **characterized in that** the control unit (4) is configured, for a current operational status of the working machine (1), so as to determine values for an engine efficiency (Eff) and for an engine power (PWR) transmitted by means of the propulsion engine (2) and to generate a respective current relative value for the engine efficiency (Eff_rel) and for the engine power (PWR_rel) by a comparison of the determined values with the maximum values for the engine efficiency (Eff_max) and the engine power (PWR_max).

3. The agricultural working machine (1) according to claim 1 or claim 2, **characterized in that** the maximum values for the efficiency (Eff_max) and for the power (PWR_max) can be specified as a function of the respective propulsion engine (2) and/or transmission (2a) and can be stored in the control unit (4) as initial values.

4. The agricultural working machine (1) according to one of claims 1 to 3, **characterized in that** the respective maximum values determined for the efficiency (Eff_max) and for the power (PWR_max) can be stored by the control unit (4) and can be called up as comparative values for the current values for the efficiency (Eff) and for the power (PWR) in order to generate the relative values (Eff_rel, PWR_rel).

5. The agricultural working machine (1) according to one of the preceding claims, **characterized in that** the control unit (4) is configured to determine ranges of values within which an optimisation of the settings for the working machine (1) is possible and to display them in conjunction with the respective current relative value for the efficiency (Eff_rel) and for the power (PWR_rel).

6. The agricultural working machine (1) according to one of claims 1 to 5, **characterized in that** the representation of one basic shape (11) which represents the maximum value for the efficiency (Eff_max) and for the engine power (PWR_max) is static in nature, while the representation of the other basic shape (12), which represents the current relative value for the efficiency (Eff_rel) and for the power (PWR_rel), is dynamic in nature.

7. The agricultural working machine (1) according to one of claims 1 to 6, **characterized in that** the representation of the relative values for the efficiency (Eff_rel) and for the power (PWR_rel) is abstracted respectively using at least two substantially identical basic geometric shapes (13, 14 and 15, 16), wherein the basic shapes (13, 14 and 15, 16) can be presented opposite each other on the display device (8).

8. The agricultural working machine (1) according to one of the preceding claims, **characterized in that** the control unit (4) is configured to determine a power threshold (PWR_Threshold) and to present abstractly by means of the display device (8), which serves to visualise the possibility of operating the propulsion engine (2) in a first or a second mode of operation.

9. The agricultural working machine (1) according to one of the preceding claims, **characterized in that** the control unit (4) is configured to control the display device (8) in order to present the current relative values (Eff_rel, PWR_rel) together with at least one earlier relative value for the efficiency and/or for the power.

10. The agricultural working machine (1) according to one of the preceding claims, **characterized in that** the control unit (1) is configured to control the display device (8) such that the relative values (Eff_rel, PWR_rel) are visualised in a comparative representation by means of symbols (27a, 27a, 28a, 28b; 29 - 34) or pictograms by means of pictorial representations.

## Revendications

1. Machine de travail agricole (1), en particulier tracteur, comprenant une chaîne de transmission, incluant au moins un moteur d'entraînement (2) ainsi qu'une transmission (2a), pour actionner la machine de travail (1) et pour entraîner au moins un organe de travail (10) destiné à accomplir ou faciliter des opérations de travail ou processus agricoles, ainsi que comprenant une unité de commande (4) pour déterminer des paramètres de fonctionnement au moins du moteur d'entraînement (2) et un dispositif d'affichage (8) pour visualiser les paramètres de fonctionnement déterminés, l'unité de commande (4) étant agencée pour déterminer, pour un état de fonctionnement instantané de la machine de travail (1), des valeurs pour un rendement (Eff) et pour une puissance (PWR) transmise par l'intermédiaire de la chaîne de transmission, pour générer respectivement une valeur relative instantanée du rendement (Eff_rel) et de la puissance (PWR_rel) par comparaison des valeurs déterminées avec des valeurs maximales enregistrées et/ou générées du rendement (Eff_max) et de la puissance (PWR_max), et pour représenter ces valeurs relatives (Eff_rel, PWR_rel) dans une représentation comparative par l'intermédiaire du dispositif d'affichage (8), **caractérisée en ce que** l'affichage des valeurs relatives du rendement (Eff_rel) et de la puissance (PWR_rel) s'effectue de façon abstraite par l'intermédiaire d'une représentation graphique combinée, et **en ce que** la représentation graphique combinée s'effectue en utilisant au moins deux formes géométriques de base sensiblement identiques (11, 12), les au moins deux formes de base (11, 12) étant représentées par le dispositif d'affichage (8) de manière superposée l'une à l'autre.

2. Machine de travail agricole (1) selon la revendication 1, **caractérisée en ce que** l'unité de commande (4) être agencée pour déterminer, pour un état de fonctionnement instantané de la machine de travail (1), des valeurs pour un rendement de moteur (Eff) et pour une puissance de moteur (PWR) transmise par l'intermédiaire du moteur d'entraînement (2) et pour générer respectivement une valeur relative instantanée du rendement de moteur (Eff_rel) et de la puissance de moteur (PWR_rel) par comparaison des valeurs déterminées avec les valeurs maximales du rendement de moteur (Eff_max) et de la puissance de moteur (PWR_max).

3. Machine de travail agricole (1) selon la revendication 1 ou 2, **caractérisée en ce que** les valeurs maximales du rendement (Eff_max) et de la puissance (PWR_max) sont prescriptibles et enregistrables en tant que valeurs de départ dans l'unité de commande (4) en fonction du moteur d'entraînement (2) et/ou de la transmission (2a) respectifs.

4. Machine de travail agricole (1) selon une des revendications 1 à 3, **caractérisée en ce que** les valeurs maximales respectivement déterminées du rendement (Eff_max) et de la puissance (PWR_max) sont stockables par l'unité de commande (4) et consultables en tant que valeurs comparatives pour les valeurs instantanées de rendement (Eff) et de puissance (PWR) afin de générer les valeurs relatives (Eff_rel, PWR_rel).

5. Machine de travail agricole (1) selon une des revendications précédentes, **caractérisée en ce que** l'unité de commande (4) est agencée pour déterminer des plages de valeurs à l'intérieur desquelles une optimisation du réglage de la machine de travail (1) est possible et pour les représenter en liaison avec la valeur relative instantanée respective du rendement (Eff_rel) et de la puissance (PWR_rel).

6. Machine de travail agricole (1) selon une des revendications 1 à 5, **caractérisée en ce que** la représentation d'une des formes de base (11), laquelle restitue les valeurs maximales du rendement (Eff_max) et de la puissance de moteur (PWR_max), s'effectue de manière statique, tandis que la représentation de l'autre forme de base (12), laquelle restitue les valeurs relatives instantanées du rendement (Eff_rel) et de la puissance (PWR_rel), s'effectue de manière dynamique.

7. Machine de travail agricole (1) selon une des revendications 1 à 6, **caractérisée en ce que** la représentation des valeurs relatives du rendement (Eff_rel) et de la puissance (PWR_rel) s'effectue de façon abstraite en utilisant respectivement au moins deux formes géométriques de base sensiblement identiques (13, 14 et 15, 16), les formes de base (13, 14 et 15, 16) étant représentables par le dispositif d'affichage (8) en vis-à-vis l'une de l'autre.

8. Machine de travail agricole (1) selon une des revendications précédentes, **caractérisée en ce que** l'unité de commande (4) est agencée pour déterminer une valeur limite de puissance (PWR_Grenz) et pour la représenter de manière abstraite au moyen du dispositif d'affichage (8), laquelle valeur sert à visualiser la possibilité de fonctionnement du moteur d'entraînement (2) dans un premier ou un second mode de fonctionnement.

9. Machine de travail agricole (1) selon une des revendications précédentes, **caractérisée en ce que** l'unité de commande (4) est agencée pour commander le dispositif d'affichage (8) afin de représenter les valeurs relatives instantanées (Eff_rel, PWR_rel) conjointement avec au moins une valeur relative précédente, située dans le passé, du rendement et/ou de la puissance.

10. Machine de travail agricole (1) selon une des revendications précédentes, **caractérisée en ce que** l'unité de commande (1) est agencée pour commander le dispositif d'affichage (8) afin de visualiser les valeurs relatives (Eff_rel, PWR_rel) dans une représentation comparative au moyen de symboles (27a, 27a, 28a, 28b ; 29-34) ou de pictogrammes par l'intermédiaire d'analogies picturales.
